# EUROPÄISCHE PATENTANMELDUNG

(11) **EP 2 194 334 A2**
(43) Veröffentlichungstag der Anmeldung: **09.06.2010**
(21) Anmeldenummer: 09178326.6
(22) Anmeldetag: 08.12.2009
(51) Int. Cl.: F24J 2/05, F24J 2/14, F24J 2/54

(54) **Vorrichtung zur Gewinnung von thermischer Energie aus Sonneneinstrahlung**

(30) Priorität: 08.12.2008 DE 202008016140 U
(71) Anmelder: Solarlite GmbH, 17179 Duckwitz (DE)
(72) Erfinder: Krüger, Joachim, 17179 Duckwitz (DE)
(74) Vertreter: von Kreisler Selting Werner

(57) **Zusammenfassung**

Die Erfindung betrifft eine Vorrichtung zur Erzeugung von thermischer Energie aus Sonneneinstrahlung mittels eines Parabolspiegels aus Verbundkunststoff mit /ohne Schaumkern und/oder Tragstruktur in verschiedensten Spannweiten. Die Vorrichtung erzeugt die thermische Energie durch die Fokussierung der Sonnenstrahlung auf eine Absorberröhre. Die Flüssigkeit in der Röhre wird erhitzt und in Dampf gewandelt, welcher anschließend für verschiedene Anwendungen in der Industrie zum Heizen oder zur Stromerzeugung genutzt werden kann.

Der Erfindung liegt die Aufgabe zugrunde, eine Vorrichtung aus Verbundkunststoff einfacher Konstruktion vorzuschlagen, um die Gewinnung von thermischer Energie der Sonneneinstrahlung mittels einer kostengünstigen Konstruktion großtechnisch, in allen Klimazonen effektiv zu erreichen.

Die erfindungsgemäße Vorrichtung zur Gewinnung von thermischer Energie aus Sonneneinstrahlung unter Verwendung von Parabolspiegeln aus Kunststoff ist **dadurch gekennzeichnet, dass** eine schwenkbare Lagerung an mindestens zwei pylonartigen Stützstrukturen seitlich der Parabolspiegel ohne zusätzliche Versteifung erfolgt. Zwei oder mehrere Parabolspiegel, welche untereinander durch Spiegelverbinder selbsttragend verbunden sind, sind zwischen den pylonartigen Stützstrukturen angeordnet.

## Beschreibung

Die Erfindung betrifft eine Vorrichtung zur Erzeugung von thermischer Energie aus Sonneneinstrahlung mittels eines Parabolspiegels aus Verbundkunststoff mit oder ohne Schaumkern und/oder Tragstruktur in verschiedensten Spannweiten. Die Vorrichtung erzeugt die thermische Energie durch die Fokussierung der Sonnenstrahlung auf eine Absorberröhre. Die Flüssigkeit in der Röhre wird erhitzt und in Dampf gewandelt, welcher anschließend für verschiedene Anwendungen in der Industrie zum Heizen oder zur Stromerzeugung genutzt werden kann.

### Stand der Technik

Die Gewinnung von thermischer Energie aus Sonneneinstrahlung mittels Parabolspiegel ist in vielfältiger Art und Weise bekannt.

In der Gebrauchsmusterschrift DE 20 2005 017 853 U1 wird ein Rinnenkollektor zur Gewinnung von Energie mittels Solarstrahlung vorgeschlagen, der aus einem plattenförmigen Bauteil mit reflektierender Oberfläche und einem Trägerelement besteht, wobei das Trägerelement aus einem Grundmodell und zumindest einem Stützelement gebildet wird, so dass das plattenförmige Bauteil durch Eingriff des Stützelements derart elastisch verformt werden kann, dass ein ringförmiger Querschnitt gebildet wird.

Der Nachteil dieser Lösung besteht darin, dass der Rinnenkollektor als Reflektor zwar auf einem einfachen Trägerelement montierbar ist, aber nicht von einen, von der Sonneneinstrahlung abhängigem effektiven Betrieb automatisch regelbar ist.

In der OS DE 100 25 212 A1 wird ein konzentrierendes Solarenergiesystem mit einem als zweiachsig nachgeführten Parabolspiegel realisierten Reflektor vorgeschlagen, der von einem in einer Tragebene angeordneten Grundrahmen getragen ist und mit einem im Betrieb im Brennpunkt des Parabolspiegels angeordneten Receiver ausgestattet ist, wobei der Parabolspiegel außerdem um eine zumindest im Wesentlichen senkrecht zur Tragebene angeordneten Achse drehbar ist, so dass der Parabolspiegel eine im Betrieb untere Kante aufweist, die zumindest im Wesentlichen unmittelbar benachbart zur Tragebene angeordnet ist und in Draufsicht entweder gerade verläuft oder leicht gekrümmt ist, und dass der Parabolspiegel um eine im Betrieb seiner unteren Kante und zumindest im Wesentlichen parallel zur Tragachse angeordnete Schwenkachse hinauf und herunter schwenkbar ist.

Nachteilig bei dieser Lösung ist die komplizierte und somit aufwendige Konstruktion.

### Aufgabe der Erfindung

Der vorliegenden Erfindung liegt die Aufgabe zugrunde, eine Tragkonstruktion einfacher Art für einen Parabolspiegel aus Verbundkunststoff vorzuschlagen, um die Gewinnung von thermischer Energie der Sonneneinstrahlung mittels einer kostengünstigen Konstruktion großtechnisch, in allen Klimazonen effektiv zu erreichen.

Gemäß der Erfindung wird diese Aufgabe durch die in den Schutzansprüchen angegebenen Merkmale gelöst.

Die erfindungsgemäße Vorrichtung zur Gewinnung von thermischer Energie aus Sonneneinstrahlung unter Verwendung von Parabolspiegeln aus Kunststoff ist **dadurch gekennzeichnet, dass** eine schwenkbare Lagerung an mindestens zwei pylonartigen Stützstrukturen seitlich der Parabolspiegel ohne zusätzliche Versteifung erfolgt. Zwei oder mehrere Parabolspiegel, welche untereinander durch Spiegelverbinder selbsttragend verbunden sind, sind zwischen den pylonartigen Stützstrukturen angeordnet.

Die Lagerung erfolgt mittels Kugellager. Über den Parabolspiegeln ist mittels mehrerer Absorberhalter ein Absorberrohr angeordnet.

Die erfindungsgemäße Vorrichtung hat den Vorteil, dass sie in unterschiedlichen klimatischen Regionen einsetzbar ist, weil die Parabolspiegel aus leichtem Verbundkunststoff (GFK) konstruiert sind. Die Lagerung der Parabolspiegel auf Kugellagern an Stahlsäulen ist einfach und für das Bewegen ist nur eine geringe Antriebsleistung notwendig. Aufgrund der einfachen Konstruktion kann die Vorrichtung kostengünstig in Serie gebaut werden. Die Größe der Vorrichtung ist durch Zufügen von weiteren Parabolspiegelrinnen einfach an die Einsatzerfordernisse anpassbar. Die Steuerung, Wartung und Reparatur der Vorrichtung ist einfach durchführbar, so dass ihr Betrieb auch in Entwicklungsländern möglich ist. Vorteilhaft ist weiter, dass die Parabolspiegel der Vorrichtung witterungsbeständig sind.

### Beispiele

Die Erfindung wird anhand von einem Ausführungsbeispiel näher erläutert. Die dazugehörige Zeichnung zeigt die Seitenansicht eines Parabolspiegels samt Stützstruktur.

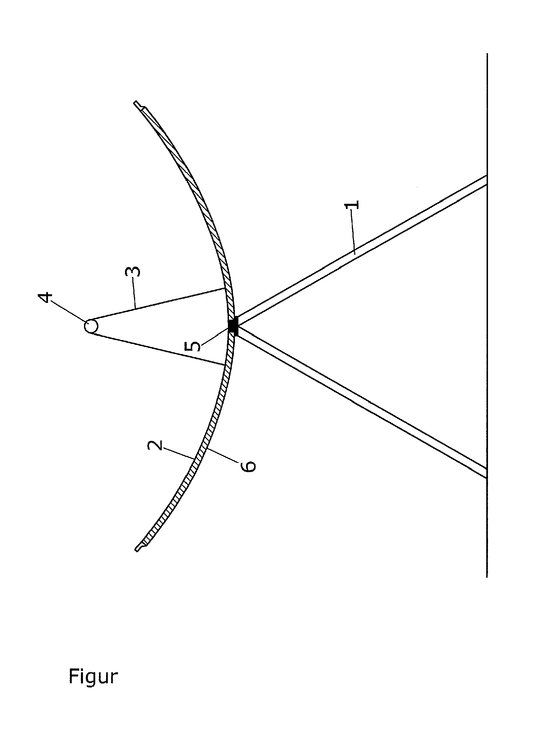

Gemäß der Zeichnung besteht die Vorrichtung aus mindestens zwei pylonartigen Stützstrukturen 1 zwischen denen zwei oder mehrere Parabolspiegel 2, die untereinander durch Spiegelverbinder verbunden werden können, auf Kugellagern 5 schwenkbar gelagert sind. Die Aufhängung erfolgt seitlich der Parabolspiegel 2. Die Steifigkeit wird durch den Parabolspiegel 2 selbst ohne zusätzliche Aufhängung ermöglicht. Über den Parabolspiegeln 2 ist mittels mehrerer Absorberhalter 3 ein Absorberrohr 4 angeordnet. Das Absorberrohr 4 befindet sich in der Regel von einer Glasröhre, die auch evakuiert sein kann, umgeben, wobei man dieses Gesamtsystem auch als Receiver bezeichnet.

Eine programmgesteuerte Kollektor-Nachführung zur Sonne über einen Antrieb ist vorgesehen. Durch Spiegelverbinder, die mit den Spiegelendplatten 6 an den Enden eines jeden Segments (ein Segment besteht in der Regel aus mehreren einzelnen Parabolspiegeln) verbunden sind, wird gewährleistet, dass die eingebrachten Parabolspiegel 2 untereinander eine starre Einheit bilden, die dadurch selbsttragend gehalten wird. Die Spiegelendplatten 6 verbinden die Parabolspiegelreihe über eine Achse mit den Kugellagern 5.

Der Spiegelgrundkörper des Parabolspiegels 2 besteht aus Verbundkunststoff (GFK). Die Oberfläche wird mit einem Reflektormaterial belegt, welches die Strahlung reflektiert.

Die Wirkungsweise der Vorrichtung zur Gewinnung von thermischer Energie wird nachfolgend beschrieben.

Die Parabolspiegelsolarrinne produziert thermische Energie durch die Fokussierung der Sonnenstrahlung auf eine Absorberröhre. Die Flüssigkeit in der Röhre wird erhitzt und in Dampf gewandelt, welcher anschließend für verschiedene Anwendungen in der Industrie zum Heizen oder zur Stromerzeugung genutzt werden kann.

Zur Stromproduktion ist eine Verbindung der Parabolspiegelreihe (Solarrinne) mit Kraftwerkskomponenten bestehend aus folgenden Bestandteilen möglich:
- ein Hoch- und ein Niedertemperaturspeicher,
- eine Expansionsmaschine mit Generator und
- elektrischer Wandler.

Die Komponenten sind so aufeinander abgestimmt. dass bei einer Sonnenstrahlung von ca. 10 h/d die elektrische Versorgung auch für die Nacht gewährleistet ist. Bei geringeren Sonnenleistungen kann eine hybride Nachheizung durch eine Feuerungsanlage z.B. über Biomasse erfolgen. Das Energiemanagement wird auf der Hochtemperaturseite mittels einer klassischen Dampftrommel in Form von Heißwasser durchgeführt. Nach der Umsetzung durch den Wandler kann die thermische Restenergie in Form von heißem Wasser mit einer Temperatur von ca. 80-105° für verschiedene thermische Anwendungen, wie z.B. Heizung, Kühlung, Meerwasserentsalzung usw. genutzt werden.

Weiter verfügt das System über eine Software-Schnittstelle zur Fernsteuerung, -diagnose und -wartung.

Als Kollektor wird eine konzentrierende Solarrinne aus Kunststoff verwendet. Der Zwischenraum zwischen Absorberrohr und Glashülle kann evakuiert sein. Ein Wärmeträgerfluid (in unserem Fall Wasser) absorbiert die Sonnenstrahlen. Der Kollektor erhitzt das Wasser bis 550°C bei 100 bar Druck. Nachdem dieses Medium erhitzt ist, durchfließt es in einem geschlossenen Kreislauf den HT-Speicher in dem die Wärme in Form von heißem Wasser zwischengepuffert wird. Durch das Aufheizen des Wassers wird Dampfdruck erzeugt. Sobald genügend Energie vorhanden ist, wird die Energie in Form von Wasserdampf der Antriebsmaschine zugeführt, in dieser entspannt und dadurch abgekühlt.

Der gewonnene Strom wird auf dem üblichem Weg über Stromleitungen zu den Verbrauchern übertragen. Nachdem der Dampf entspannt wurde, wird dieser in einem weiteren Tank zwischengespeichert. Wärmeverbraucher werden wiederum aus diesem Niedertemperaturspeicher entweder direkt oder über Wärmetauscher versorgt. Durch diese Verbraucher wird die Restenergie (Kondensatenergie) dem Dampf entzogen und dieser kondensiert zu flüssigem Wasser. Dieses Wasser wird dem HT-Speicher mittels Pumpe wieder zugeführt. Der Wasserkreis ist damit geschlossen.

## Patentansprüche

1. Vorrichtung zur Gewinnung von thermischer Energie aus Sonneneinstrahlung unter Verwendung von Parabolspiegeln aus Verbundkunststoff **dadurch gekennzeichnet, dass**
eine schwenkbare Lagerung an mindestens zwei pylonartigen Stützstrukturen (1) seitlich der Parabolspiegel (2) ohne zusätzliche Versteifung erfolgt.

2. Vorrichtung nach Anspruch 1 **dadurch gekennzeichnet, dass**
zwei oder mehrere Parabolspiegel (2), welche untereinander durch Spiegelverbinder selbsttragend verbunden sind, zwischen den pylonartigen Stützstrukturen (1) angeordnet sind.

3. Vorrichtung nach Anspruch 1 oder 2 **dadurch gekennzeichnet, dass**
die Lagerung mittels Kugellager (5) erfolgt.

4. Vorrichtung nach einem der Ansprüche 1 bis 3 **dadurch gekennzeichnet, dass** über den Parabolspiegeln (2) mittels mehrerer Absorberhalter (3) ein Absorberrohr (4) angeordnet ist.
